# EUROPÄISCHE PATENTSCHRIFT

(11) **EP 2 443 330 B1**
(45) Veröffentlichungstag und Bekanntmachung des Hinweises auf die Patenterteilung: **05.03.2014**
(21) Anmeldenummer: 10734058.0
(22) Anmeldetag: 15.06.2010
(51) Int. Cl.: F02B 29/04, F02M 35/10

(54) **SAUGROHR MIT INTEGRIERTEM LADELUFTKÜHLER**
INTAKE PIPE COMPRISING AN INTEGRATED INTERCOOLER
COLLECTEUR D'ADMISSION À REFROIDISSEUR D'AIR DE SURALIMENTATION INTÉGRÉ

(30) Priorität: 15.06.2009 DE 102009025282
(43) Veröffentlichungstag der Anmeldung: 25.04.2012
(73) Patentinhaber: Behr GmbH & Co. KG, 70469 Stuttgart (DE)
(72) Erfinder: SCHIENEMANN, Mark, 71686 Remseck (DE)
(74) Vertreter: Grauel, Andreas
(86) Internationale Anmeldenummer: PCT/EP2010/058413
(87) Internationale Veröffentlichungsnummer: WO 2010/146063

(56) Entgegenhaltungen:
- DE-A1- 4 313 505
- DE-A1- 19 853 455
- DE-A1-102007 030 464
- DE-U1-202007 012 231
- FR-A1- 2 908 832
- FR-A1- 2 908 833
- US-A- 3 881 455
- US-A- 4 476 842
- US-A- 6 029 637

## Beschreibung

Die Erfindung betrifft ein Saugrohr mit integriertem Ladeluftkühler nach dem Oberbegriff des Anspruchs 1.

Aus der Praxis des Kraftfahrzeugbaus sind Vorschläge bekannt, Ladeluftkühler in ein Saugrohr eines Verbrennungsmotors zu integrieren, wobei die Ladeluftkühler indirekt, das heißt kühlmitteldurchströmt, gekühlt werden. Beispiele derartig integrierter Ladeluftkühler sind in der FR 2 908 833, DE 10 2007 030 464 A1 oder DE 198 53 455 A1 zu finden.
Dabei ist es üblich, den Ladeluftkühler mit einer Flanschplatte zu versehen, so dass er nach Art eines Einschubs in eine Öffnung eines Saugrohrgehäuses einsetzbar und mit einem Rand der Flanschplatte Gehäuse verschraubt oder verschweiß wird. Bei einer solchen Bauform werden Vibrationen oder thermisch bedingte Verspannungen über die Flanschplatte unmittelbar auf den Ladeluftkühler geleitet.

Es ist die Aufgabe der Erfindung, ein Saugrohr mit integriertem Ladeluftkühler anzugeben, bei dem der Ladeluftkühler besonders gut gegen Vibrationen und Verspannungen geschützt ist:

Diese Aufgabe wird für ein eingangs genanntes Saugrohr erfindungsgemäß durch die kennzeichnenden Merkmale des Anspruchs 1 gelöst. Dadurch, dass der Ladeluftkühler im Wesentlichen vollständig von dem Gehäuse umfangen ist, kann er ausreichend gedämpft in dem Gehäuse aufgenommen sein. Die notwendigen Durchführungen für das Kühlfluid haben eine relativ kleine Querschnittsfläche und können über geeignete Maßnahmen so gegen das Gehäuse abgedichtet sein, dass keine erheblichen Kräfte durch Vibrationen oder thermische Verspannungen auf den Ladeluftkühler übertragen werden.

Allgemein wird unter Ladeluft im Sinne der Erfindung das dem Verbrennungsmotor zugeführte Gas verstanden und beinhaltet in diesem Sinne auch beliebige Mischungen von Luft und Abgas, sofern eine Abgasrückführung vorgesehen ist. Das erfindungsgemäße Saugrohr kann sowohl mit Dieselmotoren als auch mit Benzinmotoren kombiniert werden.

Bei einer bevorzugten Ausführungsform der Erfindung hat der Ladeluftkühler im Wesentlichen die Form eines Quaders, wobei der Ladeluftkühler senkrecht zu der größten Seitenfläche des Quaders in eines der Gehäuseteile einsetzbar ist. Hierdurch ist die Montage des Saugrohrs vereinfacht. In bevorzugter aber nicht notwendiger Detailgestaltung erfolgt dabei das Einsetzen des Ladeluftkühlers von oben.

Erfindungsgemäß ist der Ladeluftkühler eines erfindungsgemäßen Saugrohrs als Rohrbündelkühler mit einem Stapel von Flachrohren ausgebildet, wobei die Flachrohre von dem Kühlfluid durchströmt und von der Ladeluft umströmt sind. Eine solche Bauform bietet eine hohe Kühlleistung bei geringem Gewicht und kleinem Bauraum. In bevorzugter Detailgestaltung ist dabei endseitig der Flachrohre jeweils ein Sammler angeordnet, wobei die Flachrohre und die Sammler als verlöteter Block aus Metall, bevorzugt Aluminium, hergestellt sind. Neben der einfachen und kostengünstigen Herstellung fallen bei einer solchen Bauform keine Dichtungen zwischen dem Kühlfluidbereich und dem Ladeluftbereich an, so dass die Gefahr eines Wasserschlags verringert ist. Erfindungsgemäß hat zumindest einer der Sammler einen Bodenbereich und eine Sammlerwand, die zusammen aus einem Blechformteil einstückig ausgebildet sind. Hierdurch werden zum einen die Herstellungskosten verringert und zum anderen die Anzahl der Lötstellen, so dass besonders wenig Ausschuss entsteht. Zum Beispiel ist es möglich, einen Sammler aus nur drei Teilen, nämlich dem Blechformteil und zwei Deckelteilen, in anderer Ausführung auch aus fünf Teilen, nämlich dem Blechformteil und insgesamt vier Deckelteilen, auszubilden.

Bei einer weiteren bevorzugten Detailgestaltung umfasst das Rohrbündel wenigstens zwei Rohrreihen in einer Tiefenrichtung, so dass mehrere Strömungswege für das Kühlfluid zur Verfügung stehen und die Wärmetauscherleistung bei gegebenem Bauraum optimiert werden kann. Die Rohrreihen können bei einer bevorzugten Ausführungsform aus separaten Flachrohren bestehen und bei einer alternativen bevorzugten Ausführungsform aus einem einstückigen Flachrohr mit getrennten Strömungskanälen. Ein solches einstückiges Flachrohr kann beispielsweise als extrudiertes Formteil hergestellt sein. Weiterhin bevorzugt werden die Rohrreihen von dem Kühlfluid nacheinander in entgegengesetzter Richtung durchströmt, insbesondere in Gegenstromanordnung bezüglich der Strömungsrichtung der Ladeluft. Dies optimiert die Tauscherleistung bei gegebenem Bauraum. Zudem können zum Beispiel im Fall eines zweireihigen Wärmetauschers mit einem endseitigen Umlenkbereich beide Kühlfluid-Anschlüsse an dem gleichen Sammler vorgesehen werden.

Bei einer möglichen Ausführungsform der Erfindung ist an dem Ladeluftkühler zumindest ein Seitenteil angeordnet, wobei das Seitenteil eine Strukturierung zur Ausbildung einer Labyrinthdichtung gegenüber einer Innenwand des Gehäuses aufweist. Hierdurch wird auf einfache Weise ein Leckstrom der Ladeluft zwischen Ladeluftkühler und Gehäusewand unterbunden. Eine Labyrinthdichtung ist auch dann effektiv, wenn die Gehäusewand aufgrund von Druckschwankungen Ausbauchungen oder ähnliche Deformationen ausbildet. Optional kann zusätzlich zu der Labyrinthdichtung eine Elastomerdichtung vorgesehen sein.

Allgemein vorteilhaft ist der Ladeluftkühler elastisch gegenüber dem Gehäuse abgestützt. Hierdurch werden Vibrationen, die zunächst von dem Verbrennungsmotor auf das Gehäuse übertragen werden, gegenüber dem Ladeluftkühler gedämpft bzw. der Ladeluftkühler und das Saugrohrgehäuse sind entkoppelt. Die elastische Abstützung kann in möglicher Detailgestaltung mittels eines Federglieds erfolgen. Alternativ oder ergänzend kann eine elastische Abstützung auch mittels Elastomeren zwischen Ladeluftkühler und Gehäusewand erreicht werden. Diese Elastomere können neben den Aufgaben der Dämpfung zudem dichtende Funktionen ausüben.

Je nach Anforderungen kann das Gehäuse aus einem Kunststoff oder aus einem Leichtmetall, zum Beispiel auf Aluminiumbäsis, bestehen.

Bevorzugt ist an dem Austritt des Gehäuses ein Motorflansch zur Befestigung an einem Einlassbereich eines Zylinderkopfes vorgesehen, wobei der Motorflansch je nach Anforderungen bevorzugt aus Kunststoff oder aus einem Leichtmetall bestehen kann. Zur Optimierung der Kosten kann es zum Beispiel vorgesehen sein, dass der Motorflansch aus Leichtmetall besteht, während das Gehäuse des Saugrohrs aus einem Kunststoff besteht. In diesem Fall sind Motorflansch und Gehäuse als separate Teile aneinander festgelegt, zum Beispiel mittels Verschraubung. Bestehen Motorflansch und Gehäuse aus dem gleichen Material, etwa Kunststoff oder Aluminium, so können sie materialeinheitlich einstückig ausgebildet sein. Eine materialeinheitlich einstückige Ausbildung umfasst auch den Fall, dass aus bautechnischen Gründen das Gehäuse und der Motorflansch aus Kunststoff vorgefertigt und dann als separate Teile miteinander verschweißt werden, zum Beispiel mittels Ultraschallschweißen. Alternativ hierzu kann der Motorflansch, sofern die Formgebung es gießtechnisch ermöglicht, bei einem einzigen Gussvorgang mit dem Gehäuse ausgeformt werden.

Bei einer weiteren bevorzugten Ausführungsform ist ein Kühlfluid-Anschluss des Ladeluftkühlers im Bereich der Durchführungen elastisch luftdicht gegenüber dem Gehäuse abgedichtet. Die elastische Abdichtung verringert die Übertragung von Verspannungen und Vibrationen von dem Gehäuse auf den Ladeluftkühler.

Allgemein vorteilhaft ist es vorgesehen, dass zumindest ein Kühlfluid-Anschluss des Ladeluftkühlers stoffschlüssig mit dem Ladeluftkühler verbunden ist, in bevorzugter Detailgestaltung mittels Verlötung, und/oder dass zumindest ein Kühlfluid-Anschluss des Ladeluftkühlers formschlüssig mit-dem Ladeluftkühler verbunden ist, in bevorzugter Detailgestaltung mittels Verschraubung und/oder Verclipsung.

Bei einer besonders bevorzugten Ausführungsform ist zumindest ein Kühlfluid-Anschluss des Ladeluftkühlers an einer bezüglich der Schwerkraft oberen Seite des Ladeluftkühlers vorgesehen. Hierdurch kann auf zusätzliche Entlüftungsöffnungen verzichtet werden, da eine Entlüftung des Ladeluftkühlers automatisch über seine Kühlfluid-Anschlüsse erfolgt.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt. eine explodierte räumliche Ansicht eines erfindungsgemäßen Saugrohrs mit integriertem Ladeluftkühler.
- Fig. 2: zeigt eine explodierte räumliche Ansicht des Ladeluftkühlers aus Fig. 1.
- Fig. 3: zeigt eine teilweise aufgeschnittene und auf dem Kopf stehende räumliche Ansicht des Saugrohres aus Fig. 1.
- Fig. 4: zeigt eine teilweise Schnittansicht des Ladeluftkühlers aus Fig. 1.
- Fig. 5: zeigt eine erste Variante eines Gehäuseteils des Saugrohrs aus Fig. 1 mit angrenzendem Motorflansch.
- Fig. 6: zeigt eine zweite Variante des Gehäuseteils aus Fig. 5 mit angrenzendem Motorflansch.

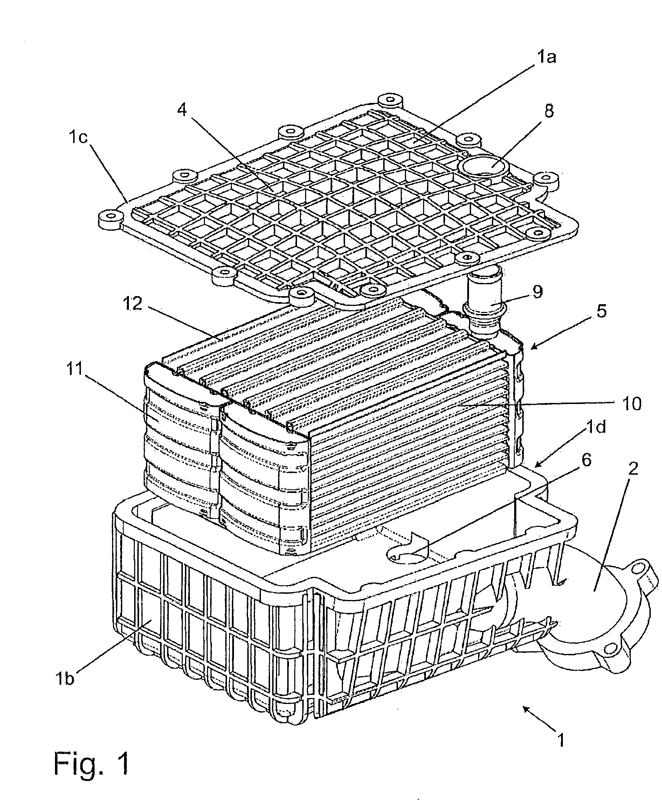

Das in Fig. 1 gezeigte erfindungsgemäße Saugrohr umfasst ein äußeres Gehäuse 1 aus Kunststoff, das ein unteres Gehäüseteil 1a und ein oberes Gehäuseteil 1b umfasst. Das untere Gehäuseteil 1a umschließt den größten Teil des Volumens des Gehäuseinneren und hat einen Zutritt 2 in Form eines rohrförmigen Flansches zum Anschluss einer Ladeluftleitung sowie einen Austritt 3 in Form einer rechteckigen Öffnung, die sich über den größten Teil einer Seitenwand erstreckt.

Der zweite, obere Gehäuseteil 1b ist im Wesentlichen in Form eines flachen Deckels mit zur Verstärkung vorgesehenen Stegstrukturen 4 ausgebildet. Verstärkende Stegstrukturen 4 finden sich auch über sämtliche Seitenwände des unteren Gehäuseteils 1a.

Die Einbaulage des Gehäuses 1 gegenüber einem nicht dargestellten Verbrennungsmotor entspricht im Wesentlichen der Lage in Fig. 1. Die Trennebene zwischen den Gehäuseteilen 1a, 1b verläuft im Wesentlichen in der Wagerechten. Ein in das Gehäuse eingesetzter Ladeluftkühler 5 hat im Wesentlichen die Form eines Quaders, welcher von dem zwischen den Gehäuseteilen 1 a, 1b vorhandenen Innenraum des Gehäuses 1 im Wesentlichen umfangen wird. Die größte Seitenfläche des Quaders verläuft in der Wagerechten und parallel zu der Trennebene zwischen den Gehäuseteilen 1a, 1 b. Wie Fig. 1 zeigt, ist der Ladeluftkühler 5 senkrecht zu der größten Seitenfiäche des Quaders in das untere Gehäuseteil 1a einsetzbar. Die Orientierung gegenüber der Senkrechten bezieht sich dabei auf die Einbaulage im Kraftfahrzeug. Es versteht sich, dass die Vormontage der Teile vor einem Einbau in das Kraftfahrzeug auch in einer anderen räumlichen Orientierung erfolgen kann. Im Beispiel nach Fig. 1 werden die beiden Gehäuseteil 1a, 1b entlang eines mit Bohrungen versehenen Randes 1 c dichtend miteinander verschraubt. Alternativ können die Teile auch dauerhaft miteinander verschweißt oder verklebt werden.

Um einen seitlichen Leckstrom der Ladeluft zu vermeiden, sind als Sammler 11, 14 ausgebildete Seiten des Ladeluftkühlers in Ausbuchtungen 1d des Gehäuseteils 1a eingebettet, die bezüglich des Gehäuses im Bereichs des Eintritts 2 eine Hinterschneidung bilden. Zwischen den Sammlern 11, 14 und den seitlichen Wänden des Gehäuseteils 1a bzw. Ausbuchtungen 1d können zudem weitere, nicht dargestellte Dichtmittel vorgesehen sein.

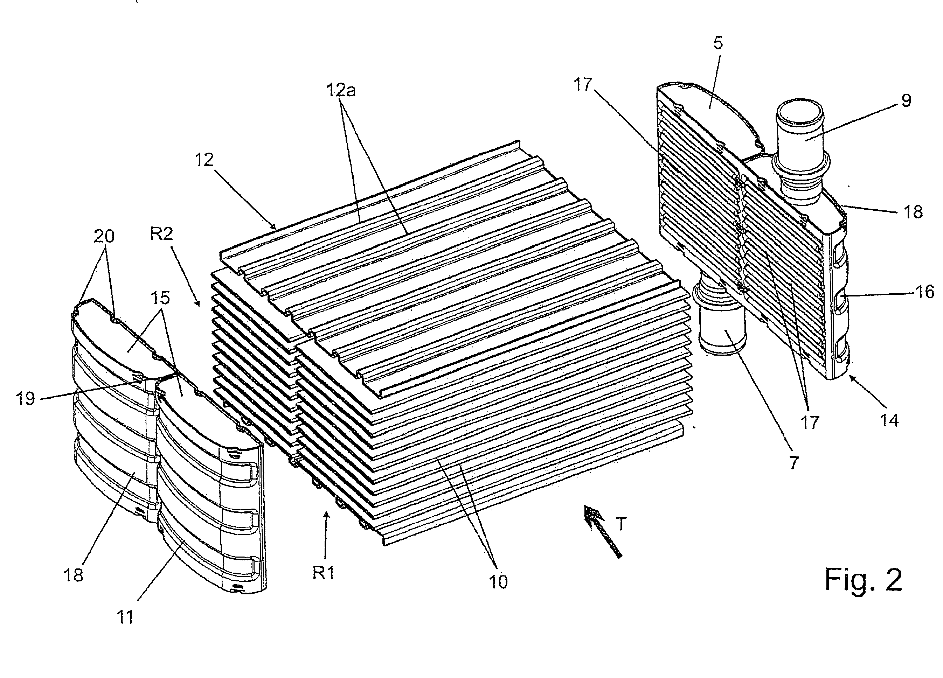

In einer Bodenseite des unteren Gehäuseteils 1a befindet sich eine erste Durchführung 6 zur Aufnahme eines zuleitenden Anschlussstutzens 7 (siehe Fig. 2) für ein Kühlfluid des Ladeluftkühlers 5. In dem deckelartigen oberen Gehäuseteil 1b befindet sich eine zweite Durchführung 8 für einen abführenden Anschlussstutzen 9 des Ladeluftkühlers 5. Der Anschlussstutzen 9 befindet sich an einer Oberseite des Ladeluftkühlers 5, so dass an dem Ladeluftkühler 5 keine weiteren Entlüftungsbohrungen vorgesehen sind. Die Entlüftung des Ladeluftkühlers 5 bezüglich des durchströmenden Kühlfluids erfolgt problemlos im eingebauten Zustand und im Betrieb über den oberen Kühlfluid-Anschluss 9.

Der Ladeluftkühler 5 ist vollständig als verlöteter Block aus Aluminiumteilen ausgebildet. Auf bekannte Weise sind zumindest einige der Bauteile ein-oder zweiseitig lotplattiert und werden nach einer mechanischen Vormontage bzw. Kassettierung in einem Lötofen verlötet.

Gemäß der explodierten Darstellung nach Fig. 2 umfasst der Ladeluftkühler 5 einen Stapel aus vorliegend zwei Reihen von separaten Flachrohren 10, die in einer Tiefenrichtung T beziehungsweise einer Richtung der Ladeluftströmung hintereinander angeordnet sind. Vorliegend verlaufen die Flachrohre in der waagerechten Ebene. Die beiden Reihen R1, R2 von Flachrohren werden von dem Kühlfluid, zum Beispiel Motor-Kühlmittel eines Niedertemperatur-Kühlkreislaufs, in entgegen gesetzter Richtung durchströmt. Wie Fig. 2 zeigt, durchströmt das Kühlmittel, das durch den unteren Kühlfluid-Anschluss 7 eintritt, zunächst die in Luftströmungsrichtung hintere Reihe R2, wird dann in einen Sammler 11 um 180° umgelenkt und durchströmt die vordere Reihe R1 von Flachrohren 10 in zu der hinteren Reihe R2 entgegen gesetzten Richtung. Die Durchströmung der Reihen R1, R2 bezüglich der der Luftströmung erfolgt zunächst durch R1 und dann durch R2, also im Gegenstrom-Verfahren.

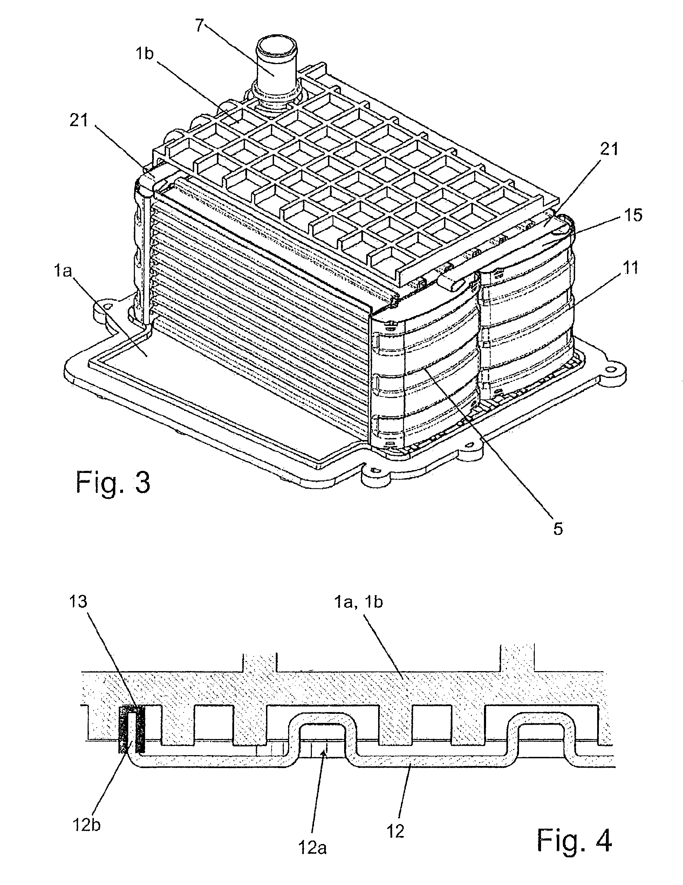

Zwischen den gestapelten Flachrohren 10 sind jeweils nicht dargestellte Lagen von Rippen vorgesehen, wobei die Rippen über beide Reihen R1, R2 durchgängig ausgebildet sind. Endseitig des Stapels von Flachrohren 10 sind jeweils Seitenteile 12 angeordnet, die mehrere sickenartige Stege 12a aufweisen, so dass die Seitenteile 12 auf einfache Weise aus einem Blech geformt werden können. Die Stege 12a bilden mit korrespondierenden stegartigen Ausformungen der gegenüberliegenden Seitenflächen der Gehäuseteile 1a, 1b eine Labyrinthdichtung, siehe insbesondere Detaildarstellung nach Fig. 4. Durch die mehrfachen Überlappungen ist eine gute Abdichtung des Ladeluftstroms gegenüber Leckströmen zwischen Ladeluftkühler 5 und Gehäuseteil 1 a, 1b mit einfachen Mitteln erreicht und ein Leckstrom entlang der oberen und unteren Seitenflächen wird vermieden. Je nach Anforderung kann ergänzend auch noch eine Elastomerdichtung 13 vorgesehen sein, die in der Darstellung nach Fig. 4 als längliches Profil auf eine endständige aufgebogene Kante 12b des Seitenteils 12 aufgesetzt ist.

Der endseitige, umlenkende Sammler 11 sowie ein eintrittsseitiger Sammler 14 sind in gleicher Bauart aus einem Blechformteil 16 sowie jeweils vier seitlichen Deckelteilen 15 ausgeformt. Das Blechformteil 16 wird in einem mitteren Abschnitt bzw. Bodenteil mit zwei Reihen von Durchzügen 17 zur Aufnahme der Enden der Flachrohre 10 versehen, wonach seitliche Überstände zur Bildung einer zweigeteilten äußeren Sammlerwand 18 umgelegt werden, Die Enden des Blechformteils treffen sich in einem Trennbereich 19 zwischen den beiden Teilen der Sammlerwand 18. Im Fall des umlenkenden Sammlers 11 sind in dieser Trennwand 19 nicht dargestellte Durchbrechungen zur Durchströmung mit dem Kühlmittel vorgesehen. Im Fall des eingangsseitigen Sammlers 14 ist die Trennwand 19 ohne Durchbrechungen ausgebildet, so dass eine Hälfte des Sammlers 14 der Zuführung und die andere Hälfte des Sammlers 14 der Abführung des Fluids dient. Insgesamt ist der Ladeluftkühler daher als U-flow-Kühler bezüglich des Kühlfluidstroms ausgeformt.

Die Sammler 11, 14 werden jeweils durch 4 Deckelteile 15, die in Laschen 20 am Rand des Blechteils 16 mechanisch zur Kassettierung gehalten sind, vervollständigt. Bei einer nicht gezeigten Variante können je Sammler 11, 14 auch nur zwei Deckelteile vorgesehen sein. Am eintrittsseitigen Sammler 14 ist an einem der unteren Deckelteile 15 ein profilierter Stutzen 7 in eine Durchbrechung eingesetzt und an einem oberen Deckelteil 15 ist ein ebenso profilierter Stutzen 9 angesetzt. Die Stutzen 7, 9 bilden Kühlfluid-Anschlüsse, wobei der untere Stutzen 7 der Zuführung und der obere Stutzen 9 der Abführung des Kühlfluids dient.

Bei einer nicht dargestellten alternativen Ausführungsform können die Stutzen 7, 9 auch nach dem Lötvorgang als separate Teile, zum Beispiel Kunststoffteile, mittels Verschraubung, Verclipsung, Verklebung oder anderen Maßnahmen eingesetzt werden.

Bei einer bevorzugten Detailgestaltung des Ausführungsbeispiels gemäß Fig. 3 ist der Ladeluftkühler 5 gegen das untere Gehäuseteil 1 a mittels eines Federglieds in Form von zwei Federblechen 21 elastisch abgestützt. Die Federbleche 21 sind in Form von Blechstreifen mit umgebogenen Enden ausgebildet, wobei die umgebogenen Enden jeweils an einem der Deckelteile 15 der Sammler 11, 14 anliegen. Durch das Federglied 21 ist eine leichte elastische Bewegbarkeit des Ladeluftkühlers 5 gegenüber dem Gehäuse 1 gegeben, so dass Vibrationen des Gehäuses 1 gegenüber dem Ladeluftkühler 5 gedämpft werden und thermische Ausdehnungen von Gehäuse 1 und Ladeluftkühler 5 kompensiert werden. Zweckmäßig sind hierzu an den Kühlfluid-Anschlüssen 7, 9 ausreichend elastische Dichtmittel (nicht dargestellt) gegenüber den Durchführungen 6, 8 in den Gehäuseteilen 1a, 1b vorgesehen.

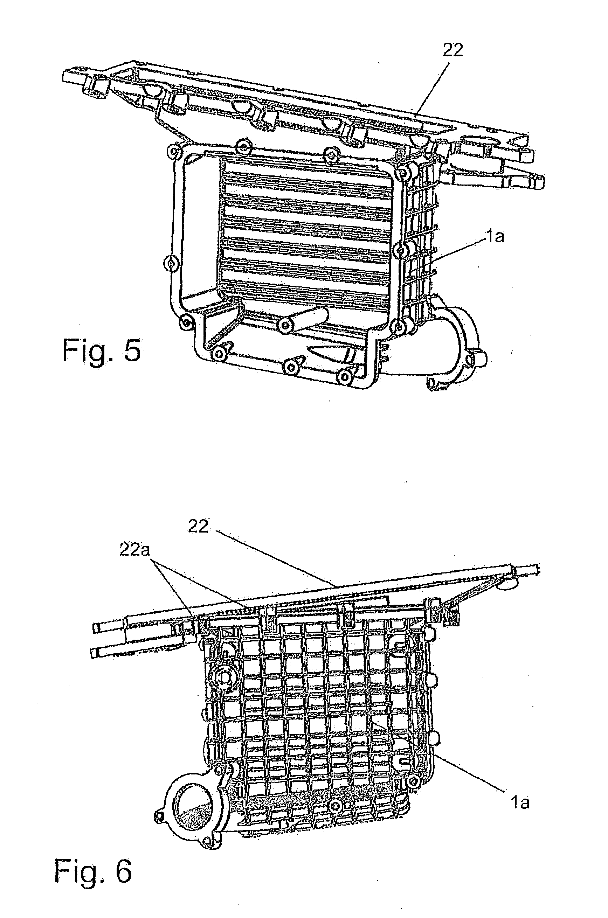

Fig. 5 und Fig. 6 zeigen zwei Ausführungsformen, bei denen jeweils ein Motorflansch 22 zur Verschraubung des Saugrohrs nach Fig. 1 mit dem Zylinderkopf eines Verbrennungsmotors an den unteren Gehäuseteil 1a an seiner austrittsseitigen Öffnung 3 vorgesehen ist.

Im Beispiel nach Fig. 5 ist der Motorflansch 22 ebenso wie das Gehäuseteil 1a aus Kunststoff ausgebildet, wobei der Motorflansch 22 und das Gehäuseteil 1a miteinander reibverschweißt sind. Sie bilden daher ein materialeinheitlich einstückiges Bauteil aus Kunststoff.

Im Beispiel nach Fig. 6 besteht der Motorflansch 22 aus Aluminium, wobei er über Verschraubungen 22a mit dem wie in Fig. 5 aus Kunststoff bestehenden Gehäuseteile 1a verschraubt ist. Bei einer nicht gezeigten Variante können auch sowohl der Motorflansch 22 als auch das Gehäuse 1 aus einem Leichtmetall wie etwa Aluminium bestehen. Die Fertigung aus Aluminium ist bei besonders hohen Ladedrücken oder auch bei lokal hohen Temperaturen, zum Beispiel in Verbindung mit einer Hochdruck-Abgasrückführung, gewünscht. Insofern Drücke und Temperaturen die Ausformung aus Kunststoff erlauben, ist diese aus Gewichts- und Kostengründen häufig; aber nicht notwendig, gewünscht. Je nach Anforderung können auch die Gehäuseteile 1a, 1b aus verschiedenem Material, etwa Aluminium und Kunststoff, bestehen.

Ganz allgemein ist unter Ladeluft im Sinne der Erfindung das dem Verbrennungsmotor zugeführte Gas zu verstehen und beinhaltet in diesem Sinne auch beliebige Mischungen von Luft und Abgas, sofern eine Abgasrückführung vorgesehen ist. Das erfindungsgemäße Saugrohr kann sowohl mit Dieselmotoren als auch mit Benzinmotoren kombiniert werden.

Es versteht sich, dass die einzelnen Merkmale verschiedener Ausführungsbeispiele je nach Anforderungen sinnvoll miteinander kombiniert werden können.

## Patentansprüche

1. Saugrohr mit integriertem Ladeluftkühler, umfassend ein Gehäuse (1) mit einem ersten Gehäuseteil (1a) und einem damit verbundenen zweiten Gehäuseteil (1 b), wobei Ladefuft über einen Zutritt (2) in das Gehäuse (1) einströmt und über einen Austritt (3) aus dem Gehäuse (1) ausströmt,
wobei der Ladeluftkühler (5) in dem Gehäuse (1) angeordnet ist und von der Ladeluft auf dem Weg von dem Zutritt (2) zu dem Austritt (3) durchströmt wird,
wobei der Ladeluftkühler (5) bis auf Durchführungen (6, 8) zur Durchleitung eines Kühlfluids vollständig von dem Gehäuse (1) umfangen ist, **dadurch gekennzeichnet, dass** der Ladeluftkühler (5) als Rohrbündelkühler mit einem Stapel von Flachrohren (10) ausgebildet ist, wobei die Flachrohre (10) von dem Kühlfluid durchströmt und von der Ladeluft umströmt sind, und endseitig der Flachrohre (10) jeweils ein Sammler (11, 14) angeordnet ist, wobei die Flachrohre (10) und die Sammler (11, 14) als verlöteter Block aus Metall, insbesondere Aluminium, hergestellt sind und zumindest einer der Sammler (11, 14) einen Bodenbereich (17) und eine Sammlerwand (18) aufweist, die zusammen aus einem Blechformtell (16) einstückig ausgebildet sind.

2. Saugrohr nach Anspruch 1, **dadurch gekennzeichnet, dass** der Ladeluftkühler (5) im Wesentlichen die Form eines Quaders hat, wobei der Ladeluftkühler (5) senkrecht zu der größten Seitenfläche des Quaders in eines der Gehäuseteile (1a) einsetzbar ist.

3. Saugrohr nach einem der Ansprüche 1 bis 2, **dadurch gekennzeichnet, dass** das Rohrbündel (10) wenigstens zwei Rohrreihen (R1, R2) in einer Tiefenrichtung (T) umfasst, wobei die Rohrreihen (R1, R2) entweder aus jeweils separaten Flachrohren (10) oder aus einem einstückigen Flachrohr mit getrennten Strömungskanälen ausgebildet sind.

4. Saugrohr nach Anspruch 3, **dadurch gekennzeichnet, dass** die Rohrreihen (R1, R2) von dem Kühlfluid nacheinander in entgegengesetzter Richtung durchströmt werden, insbesondere in Gegenstromanordnung bezüglich der Strömungsrichtung (T) der Ladeluft.

5. Saugrohr nach einem der vorhergehenden Ansprüche, **dadurch gekennzeichnet, dass** an dem Ladeluftkühler (5) zumindest ein Seitenteil (12) angeordnet ist, wobei das Seitenteil (12) eine Strukturierung (12a) zur Ausbildung einer Labyrinthdichtung gegenüber einer Innenwand des Gehäuses (1) aufweist.

6. Saugrohr nach einem der vorhergehenden Ansprüche, **dadurch gekennzeichnet, dass** der Ladeluftkühler (5) elastisch gegenüber dem Gehäuse abgestützt ist.

7. Saugrohr nach Anspruch 6, **dadurch gekennzeichnet, dass** die elastische Abstützung mittels eines Federglieds (21) erfolgt.

8. Saugrohr nach einem der vorhergehenden Ansprüche, **dadurch gekennzeichnet, dass** das Gehäuse (1) aus einem Kunststoff oder aus einem Leichtmetall besteht.

9. Saugrohr nach einem der vorhergehenden Ansprüche, **dadurch gekennzeichnet, dass** an dem Austritt ein Motorflansch (22) zur Befestigung an einem Einlassbereich eines Zylinderkopfes vorgesehen ist, wobei insbesondere der Motorflansch (22) aus Kunststoff oder aus einem Leichtmetall besteht.

10. Saugrohr nach einem der vorhergehenden Ansprüche, **dadurch gekennzeichnet, dass** ein Kühlfluid-Anschluss (7, 9) des Ladeluftkühlers (5) im Bereich der Durchführungen (6, 8) elastisch luftdicht gegenüber dem Gehäuse abgedichtet ist.

11. Saugrohr nach einem der vorhergehenden Ansprüche, **dadurch gekennzeichnet, dass** zumindest ein Kühlfluid-Anschluss (7, 9) des Ladeluftkühlers (5) stoffschlüssig mit dem Ladeluftkühler (5) verbunden ist, insbesondere mittels Verlötung, und/oder dass zumindest ein Kühlfluid-Anschluss (7, 9) des Ladeluftkühlers (5) formschlüssig mit dem Ladeluftkühler (5) verbunden ist, insbesondere mittels Verschraubung und/oder Verclipsung.

12. Saugrohr nach einem der vorhergehenden Ansprüche, **dadurch gekennzeichnet, dass** zumindest ein Kühlfluid-Anschluss (7, 9) des Ladeluftkühlers (5) an einer bezüglich der Schwerkraft oberen Seite des Ladeluftkühlers (5) vorgesehen ist.

## Claims

1. An intake pipe having an integrated intercooler, comprising:
a housing (1) having a first housing part (1a) and a second housing part (1b) connected thereto, charge air flowing into the housing (1) via an inlet (2) and
flowing out of the housing (1) via an outlet (3);
the intercooler (5) being arranged in the housing (1) and charge air flowing through the intercooler on the path from the inlet (2) to the outlet (3);
the intercooler (5) being completely surrounded by the housing (1) with the exception of passages (6, 8) for conducting through a cooling fluid;
**characterized in that** the intercooler (5) is designed as a shell-and-tube cooler having a stack of flat tubes (10), wherein the cooling fluid flows through and the charge air flows around the flat tubes (10),
and a collector (11, 14) is arranged at each end of the flat tubes (10), wherein the flat tubes (10) and
the collectors (11, 14) are produced as brazed blocks made of metal, in particular aluminum, and at least one of the collectors (11, 14) has a bottom region (17) and a collector wall (18), which together are produced as one piece from a formed sheet metal part (16).

2. The intake pipe according to claim 1, **characterized in that** the intercooler (5) essentially has the shape of a cuboid, wherein the intercooler (5) can be inserted into one of the housing parts (1a) perpendicularly to the largest lateral face of the cuboid.

3. The intake pipe according to either claim 1 or 2, **characterized in that** the tube bundle (10) comprises at least two tube rows (R1, R2) in a depth direction (T), wherein the tube rows (R1, R2) are formed either of respective separate flat tubes (10) or of a single-piece flat tube having separate flow channels.

4. The intake pipe according to claim 3, **characterized in that** the cooling fluid flows consecutively through the tube rows (R1, R2) in opposite directions, in particular in a counter-flow arrangement with respect to the flow direction (T) of the charge air.

5. An intake pipe according to any one of the preceding claims, **characterized in that** at least one lateral part (12) is arranged on the intercooler (5), wherein the lateral part (12) has a structuring (12a) for forming a labyrinth seal with respect to an inner wall of the housing (1).

6. An intake pipe according to any one of the preceding claims, **characterized in that** the intercooler (5) is elastically supported with respect to the housing.

7. The intake pipe according to claim 6, **characterized in that** the elastic support is achieved by way of a spring element (21).

8. An intake pipe according to any one of the preceding claims, **characterized in that** the housing (1) is made of a plastic material or a light alloy.

9. An intake pipe according to any one of the preceding claims, **characterized in that** an engine flange (22) for attachment to an inlet region of a cylinder head is provided at the outlet, wherein in particular the engine flange (22) is made of plastic material or of a light alloy.

10. An intake pipe according to any one of the preceding claims, **characterized in that** a cooling fluid connection (7, 9) of the intercooler (5) in the region of the passages (6, 8) is elastically sealed with respect to the housing in an air-tight manner.

11. An intake pipe according to any one of the preceding claims, **characterized in that** at least one cooling fluid connection (7, 9) of the intercooler (5) is bonded to the intercooler (5), in particular by way of brazing, and/or at least one cooling fluid connection (7, 9) of the intercooler (5) is positively connected to the intercooler (5), in particular by way of a screw or clip connection.

12. An intake pipe according to any one of the preceding claims, **characterized in that** at least one cooling fluid connection (7, 9) of the intercooler (5) is provided on an upper side of the intercooler (5) with respect to gravity.

## Revendications

1. Collecteur d'admission à refroidisseur d'air de suralimentation, comprenant: un carter (1) comportant une première partie de carter (1a) et une deuxième partie de carter (1b) assemblée avec ladite première partie de carter, où de l'air de suralimentation pénètre dans le carter (1) par une entrée (2) et sort du carter (1) par une sortie (3), où le refroidisseur d'air de suralimentation (5) est disposé dans le carter (1) et est traversé par l'air de suralimentation en circulation sur la trajectoire allant de l'entrée (2) jusqu'à la sortie (3), où le refroidisseur d'air de suralimentation (5), y compris des passages (6, 8) servant à faire circuler un fluide de refroidissement, est entouré complètement par le carter (1), **caractérisé en ce que** le refroidisseur d'air de suralimentation (5) est conçu comme un refroidisseur à faisceau de tubes comprenant une pile de tubes plats (10), où les tubes plats (10) sont traversés par le fluide de refroidissement et baignés par l'air de suralimentation, et un collecteur (11, 14) est disposé à chaque fois côté extrémité des tubes plats (10), où les tubes plats (10) et les collecteurs (11, 14) sont fabriqués comme un bloc brasé en métal, en particulier en aluminium, et au moins l'un des collecteurs (11, 14) présente une zone de plateau (17) et une paroi de collecteur (18) qui sont configurées en formant ensemble une seule et même pièce de forme en tôle (16).

2. Collecteur d'admission selon la revendication 1, **caractérisé en ce que** le refroidisseur d'air de suralimentation (5) a essentiellement la forme d'un parallélépipède, où le refroidisseur d'air de suralimentation (5) peut être introduit dans l'une des parties de carter (1a), perpendiculairement à la plus grande surface latérale du parallélépipède.

3. Collecteur d'admission selon l'une des revendications 1 ou 2, **caractérisé en ce que** le faisceau de tubes (10) comprend, suivant une direction en profondeur (T), au moins deux rangées de tubes (R1, R2), où les rangées de tubes (R1, R2) sont configurées soit en étant constituées de tubes plats (10) à chaque fois séparés, soit constituées d'un tube plat configuré en formant un seul et même élément ayant des conduits d'écoulement séparés.

4. Collecteur d'admission selon la revendication 3, **caractérisé en ce que** les rangées de tubes (R1, R2) sont traversées, l'une après l'autre, par le fluide de refroidissement circulant en sens opposé, en particulier suivant un agencement de flux opposés par rapport à la direction d'écoulement (T) de l'air de suralimentation.

5. Collecteur d'admission selon l'une quelconque des revendications précédentes, **caractérisé en ce qu'**au moins une partie latérale (12) est disposée sur le refroidisseur d'air de suralimentation (5), où la partie latérale (12) présente une structuration (12a) servant à la configuration d'un joint à labyrinthe par rapport à une paroi intérieure du carter (1).

6. Collecteur d'admission selon l'une quelconque des revendications précédentes, **caractérisé en ce que** le refroidisseur d'air de suralimentation (5) est supporté élastiquement par rapport au carter.

7. Collecteur d'admission selon la revendication 6, **caractérisé en ce que** le support élastique est réalisé au moyen d'un élément faisant ressort (21).

8. Collecteur d'admission selon l'une quelconque des revendications précédentes, **caractérisé en ce que** le carter (1) se compose d'une matière plastique ou d'un métal léger.

9. Collecteur d'admission selon l'une quelconque des revendications précédentes, **caractérisé en ce qu'**il est prévu, au niveau de la sortie, une bride de moteur (22) servant à la fixation sur une zone d'admission d'une culasse de cylindre, où la bride de moteur (22) se compose en particulier de matière plastique ou d'un métal léger.

10. Collecteur d'admission selon l'une quelconque des revendications précédentes, **caractérisé en ce qu'**un raccordement de fluide de refroidissement (7, 9) du refroidisseur d'air de suralimentation (5) est rendu étanche par rapport au carter, de manière étanche à l'air et de façon élastique, dans la zone des passages (6, 8).

11. Collecteur d'admission selon l'une quelconque des revendications précédentes, **caractérisé en ce qu'**au moins un raccordement de fluide de refroidissement (7, 9) du refroidisseur d'air de suralimentation (5) est assemblé par continuité de matière avec le refroidisseur d'air de suralimentation (5), en particulier par brasage, et/ou **en ce qu'**au moins un raccordement de fluide de refroidissement (7, 9) du refroidisseur d'air de suralimentation (5) est assemblé par complémentarité de forme avec le refroidisseur d'air de suralimentation (5), en particulier au moyen d'un assemblage vissé et/ou clipsé.

12. Collecteur d'admission selon l'une quelconque des revendications précédentes, **caractérisé en ce qu'**au moins un raccordement de fluide de refroidissement (7, 9) du refroidisseur d'air de suralimentation (5) est prévu sur un côté supérieur - par rapport à la force de gravité - du refroidisseur d'air de suralimentation (5).
